# FASCICULE DE BREVET EUROPEEN

(11) **EP 0 564 342 B1**
(45) Date de publication et mention de la délivrance du brevet: **02.09.1998**
(21) Numéro de dépôt: 93400801.2
(22) Date de dépôt: 29.03.1993
(51) Int. Cl.: F25D 3/04, F25B 1/00, F25B 39/00

(54) **Bac de production et de stockage de glace**
Behälter zur Erzeugung und zum Speichern von Eis
Container for production and storage of ice

(30) Priorité: 30.03.1992 FR 9203831
(43) Date de publication de la demande: 06.10.1993
(73) Titulaire: CARRIER S.A., F-01120 MONTLUEL (FR)
(72) Inventeur: Mauer, Georges, F-27000 Evreux (FR); Simplex, Bernard, F-27229 Saint-André-de-l'Eure (FR)
(74) Mandataire: Martin, Jean-Jacques

(56) Documents cités:
- EP-A- 0 049 174
- EP-A- 0 441 553
- EP-A- 0 449 783
- US-A- 4 738 121

## Description

La présente invention concerne un bac de production et de stockage de glace tel que défini dans le préambule des revendications 1 et 5. Un tel bac, qui est connu du document EP-A-0 441 553, est propre à faire partie d'un dispositif de réfrigération de fluide.

On a récemment commencé à utiliser des dispositifs de réfrigération de fluide comportant un bac de production et de stockage de glace pour alimenter en frigories des installations de traitement d'air, et par exemple de climatisation, dans lesquelles l'air à traiter traverse notamment une batterie dite "froide" d'échange thermique avec un liquide anti-gel tel que de l'eau glycolée, porté à une température inférieure à la température ambiante et qu'une pompe fait à cet effet circuler entre cette batterie froide et le bac de production et de stockage de glace, dans lequel ce liquide anti-gel évolue dans une relation d'échange thermique direct avec la glace, librement ou de façon guidée par des chicanes ; le liquide anti-gel tel que de l'eau glycolée constitue à cet égard le fluide à réfrigérer par échange thermique avec la glace dans le bac.

Naturellement, il y a lieu de fabriquer initialement puis de reconstituer la glace, dans le bac, au fur et à mesure qu'elle fond par échange thermique avec le fluide à réfrigérer et un mode de production consiste à utiliser à titre de fluide réfrigéré le fluide à réfrigérer lui-même, à savoir le liquide anti-gel tel que de l'eau glycolée, qui, à l'extérieur du bac, traverse alors un échangeur dans lequel il est placé en relation d'échange thermique avec une batterie d'évaporation d'un gaz tel que du fréon, fourni par une machine frigorifique comportant également traditionnellement un compresseur, un condenseur et un détendeur, avant d'être réintroduit dans le bac où il restitue les frigories ainsi accumulées pour produire de la glace.

Dans sa demande de brevet européen N° EP-A-0 564 344, bénéficiant de la même priorité que la présente demande, la demanderesse propose de remédier à certains inconvénients inhérents à l'utilisation d'eau glycolée en lui substituant, en tant que fluide réfrigéré destiné à assurer la production de glace comme en tant que fluide à réfrigérer au moyen de la glace ainsi produite, un fluide gazeux tel que de l'air ou tout autre fluide apte à rester à l'état gazeux dans toutes les conditions de température et de pression auxquelles il peut être soumis au moins lors de sa circulation dans le bac, par opposition à des fluides frigorigènes tels que le mélange gazeux désigné par la marque enregistrée Fréon, dont on utilise le passage d'une phase liquide à une phase gazeuse par détente directe dans des serpentins plongés dans le bac pour produire de la glace dans celui-ci, selon une technique décrite dans EP-A-0 441 553.

Dans sa demande de brevet européen précitée, la demanderesse prévoit soit de faire évoluer indépendamment l'un de l'autre, dans le bac, un fluide réfrigéré et un fluide à réfrigérer identiques ou différents, soit de faire circuler dans le bac un seul et même fluide jouant en alternance le rôle de fluide réfrigéré et le rôle de fluide à réfrigérer, en assurant dans l'un et l'autre cas la réfrigération du fluide réfrigéré par échange thermique entre celui-ci et un fluide frigorigène à l'extérieur du bac.

La présente invention propose une conception interne de bac de production et de stockage de glace à la fois simple, économique de réalisation et propre à assurer un échange thermique particulièrement efficace entre, d'une part, le fluide réfrigéré ou le fluide à réfrigérer et, d'autre part, la glace à produire ou à utiliser comme source de frigories, lorsque le fluide réfrigéré et le fluide à réfrigérer sont des fluides qui, gazeux comme le propose la demande de brevet européen précitée de la demanderesse ou liquides comme il est connu par ailleurs, sont destinés à rester en phase respectivement gazeuse ou liquide notamment lors de leur circulation dans le bac.

Selon un premier aspect de la présente invention, lorsqu'il y a lieu de faire circuler indépendamment l'un de l'autre, dans le bac, le fluide réfrigéré et le fluide à réfrigérer en les plaçant en relation d'échange thermique avec la glace, on propose d'utiliser à cet effet un bac tel que défini en revendication 5. On obtient ainsi un mode de réalisation particulièrement compact et efficace, en termes d'échange thermique entre la glace, d'une part, le fluide réfrigéré ou à réfrigérer, d'autre part, surtout si les faisceaux respectivement pour le fluide réfrigéré et pour le fluide à réfrigérer sont mutuellement croisés ou encore présentent la même orientation et sont parcourus dans des sens mutuellement opposés par le fluide réfrigéré et le fluide à réfrigérer, respectivement.

Lorsque le fluide à réfrigérer est gazeux et notamment lorsqu'il s'agit d'air provenant d'un local avec une hygrométrie variable, éventuellement importante, on évite dans toute la mesure du possible la formation et le gel de condensats dans ce fluide à réfrigérer au passage du faisceau correspondant du bac, si l'on prend la précaution de disposer les faisceaux tubulaires plats, dans ledit groupe, de telle sorte qu'un faisceau tubulaire plat pour le fluide réfrigéré soit intercalé entre un faisceau tubulaire plat pour le fluide à réfrigérer et un espace de production et de stockage de glace et comporte une paroi libre délimitant cet espace. En outre, cette disposition favorise les échanges thermiques entre le fluide réfrigéré et la glace, certes au détriment des échanges thermiques entre la glace et le fluide à réfrigérer sans que cela ait toutefois de conséquences véritablement néfastes dans la mesure où l'on ne cherche généralement pas à porter ce fluide à réfrigérer à une température aussi basse que celle de la glace. On prévoit cependant de préférence, en outre, des moyens d'évacuation des condensats du faisceau ou des faisceaux pour le fluide à réfrigérer.

Le long de parois du bac, on peut respecter cette condition au moyen d'un groupe d'un premier type, ne comportant que deux faisceaux tubulaires plats, à raison d'un faisceau pour le fluide réfrigéré, placé par ladite paroi libre au contact direct de l'espace de fabrication et de stockage de glace, et d'un faisceau pour le fluide à réfrigérer, jouxtant une paroi, de préférence thermiquement isolée, du bac. On peut réaliser de façon particulièrement simple et économique un tel groupe de deux faisceaux tubulaires plats sous forme de trois parois plates, mutuellement parallèles, dont l'une peut avantageusement être constituée par une paroi du bac et qui sont raccordées mutuellement par des cloisons mutuellement parallèles définissant les faisceaux pour le fluide réfrigéré et pour le fluide à réfrigérer, entre les parois. Dans le cas d'un groupe dissocié d'une paroi du bac, on respecte cette condition en prévoyant, selon un deuxième type, que ce groupe comporte un faisceau tubulaire plat pour le fluide à réfrigérer, intercalé entre deux faisceaux tubulaires plats pour le fluide réfrigéré, lesquels comportent une paroi libre respective délimitant un espace respectif de production et de stockage de glace. On peut réaliser de façon particulièrement simple et économique un tel groupe de trois faisceaux tubulaires plats, mutuellement juxtaposés dans une relation de recouvrement mutuel intégral dans laquelle deux des faisceaux tubulaires plats présentent une paroi libre respective, sous forme de quatre parois plates, mutuellement parallèles, raccordées mutuellement par des cloisons mutuellement parallèles définissant les faisceaux pour le fluide réfrigéré et pour le fluide à réfrigérer, entre les parois ; naturellement, dans ce cas également, on préfère orienter le faisceau tubulaire plat pour le fluide à réfrigérer de façon croisée, par exemple à 90°, par rapport aux deux faisceaux tubulaires plats destinés au fluide réfrigéré ou encore orienter identiquement les trois faisceaux tubulaires plats et faire circuler le fluide à réfrigérer à contre-courant du fluide réfrigéré.

Selon les cas, on peut prévoir par le bac un seul desdits groupes, notamment du deuxième type, par exemple selon un plan de symétrie du bac, entre deux espaces de fabrication et de stockage de glace, ou encore deux desdits groupes, notamment du premier type, le long de deux parois mutuellement parallèles du bac et respectivement de part et d'autre d'un unique espace de fabrication et de stockage de glace, ce qui convient à des bacs particulièrement plats selon une direction perpendiculaire aux faisceaux tubulaires plats.

Si les impératifs d'encombrement du bac perpendiculairement au faisceau tubulaire plat le permettent, on préfère toutefois prévoir dans un même bac de production et de stockage de glace une pluralité desdits groupes, notamment deux groupes du premier type et un ou plusieurs groupes du deuxième type, disposés mutuellement parallèlement de telle sorte que les faisceaux pour le fluide réfrigéré présentent la même orientation et que les faisceaux pour le fluide à réfrigérer présentent également la même orientation, qui est de préférence croisée par rapport à celle des faisceaux pour le fluide réfrigéré, auquel cas les faisceaux pour le fluide réfrigéré sont raccordés mutuellement par des moyens collecteurs de fluide réfrigéré et les faisceaux pour le fluide à réfrigérer sont raccordés mutuellement par des moyens collecteurs de fluide à réfrigérer.

Selon un deuxième aspect de la présente invention, lorsqu'il y a lieu de faire circuler en alternance, dans le bac, le fluide réfrigéré et le fluide à réfrigérer, alors de préférence de même nature, on propose d'utiliser à cet effet un bac tel que défini en revendication 1. Ledit faisceau peut avantageusement être défini de façon particulièrement simple et économique par deux parois plates, mutuellement parallèles, raccordées mutuellement par des cloisons mutuellement parallèles.

Le faisceau tubulaire plat dans lequel on fait ainsi circuler alternativement l'un ou l'autre des fluides respectivement réfrigéré ou à réfrigérer peut être unique, et de préférence placé alors en position centrale dans le bac de façon à y définir deux espaces de production et de stockage de glace, c'est-à-dire à être entouré de glace, ou être prévu en une pluralité d'exemplaires, disposés mutuellement parallèlement de façon à présenter la même orientation et à délimiter deux à deux des espaces de production et de stockage de glace, les différents faisceaux étant alors raccordés mutuellement par des moyens collecteurs.

Dans la mesure où l'un, au moins, des fluides respectivement réfrigéré et à réfrigérer, s'il s'agit d'un fluide gazeux tel que de l'air, peut être chargé d'humidité, appelée à se condenser à la traversée du bac par l'intermédiaire du faisceau ou des faisceaux, le bac comporte de préférence des moyens d'évacuation des condensats ainsi formés dans le faisceau, respectivement les faisceaux.

D'autres avantages des différents aspects de l'invention ressortiront de la description ci-dessous, relative à des exemples non limitatifs de mise en oeuvre, ainsi que des dessins annexés qui font partie intégrante de cette description.
- La figure 1 illustre schématiquement, en élévation latérale avec arrachement partiel, une installation de traitement d'air mettant en oeuvre un bac à glace selon l'invention avec circulations mutuellement indépendantes du fluide réfrigéré et du fluide à réfrigérer, constitués par exemple l'un et l'autre par de l'air.
- La figure 2 montre une vue de cette installation en coupe par un plan repéré en II-II à la figure 1.
- La figure 3 montre une vue partielle, en perspective, des groupes de faisceaux tubulaires plats prévus dans le bac à glace en vue de la circulation mutuellement indépendante du fluide réfrigéré et du fluide à réfrigérer.
- Les figures 4, 5, 6 montrent des vues schématiques, en coupe, d'une même installation de traitement d'un fluide tel que de l'air par réfrigération et déshumidification dans trois états différents, correspondant à des phases différentes de fonctionnement de cette installation, le fluide à traiter tel que de l'air constituant alternativement le fluide réfrigéré et le fluide à réfrigérer et traversant les mêmes faisceaux tubulaires plats d'un bac à glace selon l'invention dans un sens ou dans l'autre suivant le cas.
- La figure 7 montre une vue en perspective des faisceaux tubulaires plats prévus dans ce cas à l'intérieur du bac à glace.
- La figure 8 illustre, en une vue en perspective, une variante de réalisation des groupes de faisceaux tubulaires plats illustrés à la figure 3, propres à assurer à l'intérieur du bac à glace la circulation mutuellement indépendante du fluide réfrigéré et du fluide à réfrigérer, constitués par exemple l'un et l'autre par de l'air, en relation d'échange thermique avec la glace.

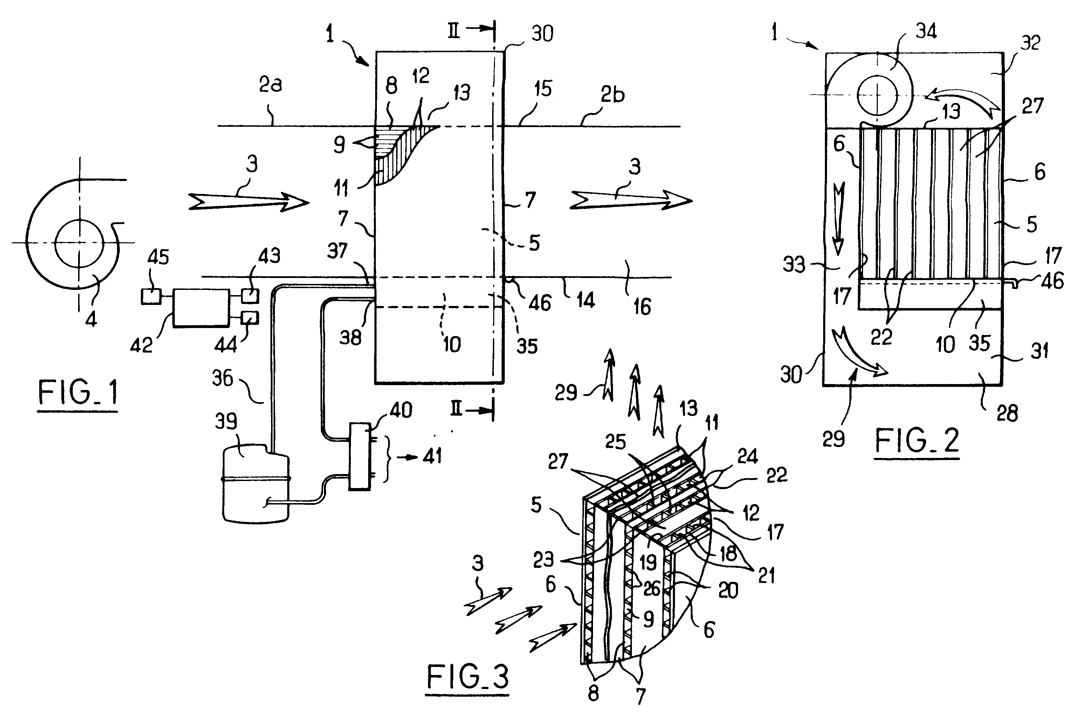

On se réfèrera en premier lieu aux figures 1 à 3 qui illustrent un dispositif de réfrigération 1 intercalé entre deux tronçons 2a, 2b d'une gaine par exemple horizontale véhiculant un flux d'air de sens 3, également horizontal, qui arrive en tant que fluide à réfrigérer, par le tronçon 2a, en provenance d'un local dont on désire traiter l'air avant de l'y réinjecter et/ou de l'extérieur, grâce à des moyens connus d'un Homme du métier et dont on n'a représenté qu'un ventilateur 4, et qui quitte le dispositif 1 après réfrigération, par le tronçon 2b, en vue d'une réinjection dans le local considéré.

Au passage, entre les tronçons 2a et 2b, l'air à réfrigérer traverse de part en part sans être dévié, c'est-à-dire ici horizontalement, un bac 5 de production et de stockage de glace dont un exemple préféré de réalisation va être décrit à présent, plus particulièrement en référence à la figure 3.

Ce bac 5 présente la forme générale d'un parallélépipède rectangle défini, si l'on considère comme référence de longitudinalité le sens 3 ici horizontal, par :
- deux parois latérales 6 plates, mutuellement parallèles, orientées longitudinalement et verticalement, ces deux parois latérales 6 étant continues et étanches,
- deux parois frontales 7 également plates, mutuellement parallèles et verticales mais transversales, raccordant deux à deux les parois latérales 6 respectivement face au tronçon 2a et face au tronçon 2b, ces deux parois frontales 7 étant étanches, se raccordant de façon étanche aux deux parois latérales 6 mais présentant localement, suivant plusieurs alignements verticaux régulièrement répartis entre les parois latérales 6, des embouchures de faisceaux tubulaires plats respectifs 8, mutuellement parallèles, dont chacun est formé de la superposition, en direction verticale, de tubes 9 rectilignes, longitudinaux, c'est-à-dire horizontaux, dont chacun débouche ainsi dans l'une et l'autre des parois 7, respectivement vers le tronçon 2a et vers le tronçon 2b,
- une paroi de fond 10 plate, longitudinale et horizontale, étanche et se raccordant de façon étanche aux deux parois latérales 6 comme aux deux parois frontales 7, cette paroi de fond 10 présentant suivant des alignements longitudinaux, régulièrement répartis entre les parois latérales 6, des embouchures de faisceaux tubulaires plats respectifs 11 mutuellement parallèles, dont chacun est formé de la juxtaposition longitudinale d'une pluralité de tubes verticaux 12 dont chacun débouche ainsi d'une part vers le bas dans la paroi de fond 10 et d'autre part vers le haut, dans une face d'extrémité supérieure 13 du bac 5, laquelle face 13 est plane, horizontale, et délimite vers le haut les parois latérales 6 et les parois frontales 7.

Chacun des faisceaux tubulaires plats 8, 11 s'étend de l'une à l'autre des parois frontales 7 et de la paroi de fond 10 à la face supérieure 13 du bac 5, sans discontinuité.

La paroi de fond 10 et la face d'extrémité supérieure 13 du bac 5 sont respectivement de niveau avec une paroi inférieure 14 et avec une paroi supérieure 15, l'une et l'autre horizontales, des tronçons 2a et 2b de gaîne, lesquels sont par ailleurs délimités par deux parois latérales 16 respectives verticales, prolongeant longitudinalement respectivement l'une et l'autre des parois latérales 6 du bac 5, chacun des tronçons 2a et 2b et le bac 5 présentant ainsi des sections transversales respectives rectangulaires, éventuellement carrées, mutuellement identiques.

On observera que les faisceaux tubulaires plats 8 et les faisceaux tubulaires plats 11, les uns et les autres à la fois longitudinaux et verticaux, sont non seulement mutuellement parallèles mais également parallèles aux parois latérales 6 du bac 5.

De préférence, comme il est illustré, ces faisceaux 8 et 11 sont mutuellement groupés, et ceci de façon différente suivant qu'ils se situent le long de l'une des parois latérales 6 du bac 5 ou qu'ils se situent en position intermédiaire entre ces parois latérales 6, si l'on se réfère à un mode de réalisation préféré illustré à la figure 3, étant entendu que d'autres modes de réalisation pourraient être choisis sans que l'on sorte pour autant du cadre de la présente invention.

Si l'on se réfère à la figure 3, le long de chacune des parois latérales 6 du bac 5 est disposé un groupe respectif 17 de deux faisceaux tubulaires plats, à raison d'un faisceau tubulaire 8, dont les tubes 9 sont orientés longitudinalement, directement accolé à la paroi latérale 6 considérée, et d'un faisceau tubulaire 11, dont les tubes 12 sont orientés verticalement, directement accolé au faisceau tubulaire plat 8 précité, naturellement dans l'un et l'autre cas entre les deux parois latérales 6 du bac 5, c'est-à-dire à l'intérieur de celui-ci. De préférence, comme il est illustré, chaque groupe 17 est formé de l'association de trois parois plates étanches, mutuellement parallèles, à raison de la paroi latérale 6 correspondante et de deux autres parois 18, 19 situées entre les deux parois latérales 6 ; chacune de ces parois 18, 19 se raccorde de façon étanche aux parois frontales 7 ainsi qu'à la paroi de fond 10 du bac 5 et s'étend par ailleurs jusqu'à la face d'extrémité supérieure 13 de celui-ci. La paroi 18, située entre la paroi 19 et la paroi latérale 6 considérée, est raccordée à cette dernière par une pluralité de cloisons 20 plates, longitudinales, horizontales, c'est-à-dire en outre mutuellement parallèles, et étanches qui délimitent deux à deux ainsi qu'avec les parois latérales 6 et 18 les différents tubes 9 du faisceau 8 ; de même, la paroi 19 est raccordée à la paroi 18 par une pluralité de cloisons 21 plates, transversales, c'est-à-dire mutuellement parallèles et verticales, et étanches qui délimitent deux à deux, ainsi qu'avec les parois 18 et 19, les différents tubes 12 du faisceau 11 considéré ; les cloisons 20 s'étendent ainsi de l'une à l'autre des parois frontales 7 du bac 5, et les cloisons 21 s'étendent de la paroi de fond 10 jusqu'à la face d'extrémité supérieure 13 de ce bac 5.

Entre les deux groupes 17, associés aux parois latérales 6 et comportant ainsi chacun un faisceau tubulaire plat 8 et un faisceau tubulaire plat 11, est disposé au moins un groupe 22 de trois faisceaux tubulaires à raison de deux faisceaux tubulaires 11 entourant un faisceau tubulaire 8 auquel ils sont accolés ; dans l'exemple illustré à la figure 2, on a ainsi prévu sept groupes intermédiaires 22, ce chiffre n'étant naturellement indiqué qu'à titre d'exemple non limitatif.

Chaque groupe 22 est défini par quatre parois plates, mutuellement parallèles, à raison de deux parois extrêmes 23 et de deux parois intermédiaires 24, qui sont étanches et s'étendent longitudinalement de l'une à l'autre des parois frontales 7, auxquelles elles se raccordent de façon étanche, et verticalement de la paroi de fond 10, à laquelle elles se rattachent de façon étanche, jusqu'à la face d'extrémité supérieure 13 du bac 5. Chacune des parois extrêmes 23 est raccordée à la paroi intermédiaire 24 respectivement la plus proche par une pluralité de cloisons 25 plates, mutuellement parallèles, orientées transversalement par rapport au sens 3, étanches et s'étendant de la paroi de fond 10 jusqu'à la face extrême supérieure 13 du bac 5 pour définir entre elles, ainsi qu'entre la paroi extrême 23 et la paroi intermédiaire 24 associée, les tubes 12 d'un faisceau tubulaire 11 respectif. De même, les deux parois intermédiaires 24 sont raccordées mutuellement par une pluralité de cloisons plates 26 mutuellement parallèles, longitudinales et plus précisément horizontales, et étanches qui s'étendent de l'une à l'autre des parois frontales 7 et définissent entre elles, ainsi qu'entre les parois intermédiaires 24, les différents canaux 9 d'un faisceau 8.

L'espacement transversal mutuel des parois 18 et 6, de même que les caractéristiques dimensionnelles des cloisons 20 et 26, sont choisis de telle sorte que, considérés dans leur ensemble, les canaux 9 offrent à l'air passant du tronçon 2a au tronçon 2b, qui jouent vis-à-vis de ces canaux le rôle de collecteur d'entrée et de collecteur de sortie, respectivement, et constituant le fluide à réfrigérer au moyen du dispositif selon l'invention 1 une section transversale de passage suffisante, de façon aisément déterminable par un Homme du métier.

De même, l'écartement transversal mutuel des parois 18 et 19 de chaque groupe 17 et celui de chaque paroi 23 d'un groupe 22 par rapport à la paroi intermédiaire 24 respectivement la plus proche sont choisis, conjointement avec le dimensionnement des cloisons 21 et 25, de telle sorte que l'ensemble des tubes 12 offre une section horizontale de passage suffisante à un fluide réfrigéré traversant le bac 5 verticalement par les tubes 12, en pratique de bas en haut, en parcourant un circuit fermé qui va être décrit à présent plus particulièrement en référence à la figure 2, afin de fabriquer à l'intérieur du bac 5 de la glace dans laquelle le fluide à réfrigérer, à savoir l'air transitant par les tronçons 2a et 2b, pourra puiser des frigories au fur et à mesure des besoins.

Afin d'assurer le stockage de cette glace, les groupes 22 sont espacés transversalement, à l'intérieur du bac, d'une part de façon mutuelle et d'autre part vis-à-vis des groupes 17, par exemple selon une répartition uniforme suivant une direction transversale horizontale, de telle sorte qu'entre des parois extrêmes 23 appartenant à deux groupes 22 mutuellement voisins de même qu'entre la paroi 19 de chaque groupe 17 et la paroi 23 du groupe 22 directement voisin subsistent, entre des parois frontales 7 du bac 5, au-dessus de la paroi de fond 10 de celui-ci et jusqu'à sa face extrême supérieure 13, des espaces 27 qui, à la mise en route du dispositif 1, peuvent recevoir de l'eau que l'on transforme en glace qu'ensuite, une alternance de prélèvements et d'apports de frigories fait fondre et régénère alternativement.

On remarque que dans chacun des groupes 17 et 22, les tubes 9 véhiculant le fluide à réfrigérer, à savoir de l'air dans l'exemple illustré, ne sont placés au contact de la glace que par l'intermédiaire des tubes 12 destinés à véhiculer le fluide réfrigéré, lesquels sont quant à eux placés au contact direct des espaces 27 de production et de stockage de glace, étant entendu que les parois 18, 19, 23, 24 sont réalisées en des matériaux offrant une bonne conductibilité thermique afin d'autoriser des échanges thermiques non seulement entre le fluide réfrigéré et la glace, mais également entre la glace et le fluide à réfrigérer ; par contre, les parois latérales 6 du bac 5 sont avantageusement isolées thermiquement.

Le circuit fermé précité 28, parcouru par le fluide réfrigéré, en pratique de l'air déshumidifié, dans un sens indiqué par une flèche 29, ascendant à l'intérieur des tubes 12, est défini à l'extérieur du bac 5 par un carter transversal 30 fermé de façon étanche sur le bac 5 et comportant sous la paroi de fond 10 de celui-ci un collecteur d'entrée 31, au-dessus de la face extrême supérieure 18 de celui-ci un collecteur de sortie 32, et le long de l'une des parois 6 du bac 5 une gaine 33 raccordant mutuellement les deux collecteurs 31 et 32, et parcourue dans un sens vertical descendant par le fluide réfrigéré.

La circulation de celui-ci à l'intérieur du circuit fermé 28, dans le sens 29, est provoquée par un ventilateur de circulation 34 logé dans le collecteur de sortie 32 notamment quant à son aspiration, et refoulant dans la gaine 33, vers le bas et vers le collecteur d'entrée 31.

A l'intérieur de ce collecteur d'entrée 31, immédiatement en dessous de la paroi de fond 10 du bac 5 et sur la totalité de l'étendue de cette paroi de fond 10, c'est-à-dire immédiatement en amont des tubes 12 des faisceaux 11 si l'on se réfère au sens 29, est disposée une batterie 35 d'échange thermique entre le fluide réfrigéré, avant la pénétration de celui-ci dans les tubes 12 des faisceaux 11, et un fluide frigorigène fourni à la batterie d'échange thermique 35 par une machine frigorifique 36 extérieure au bac 5 et au circuit fermé 28 et comportant successivement, d'une sortie 37 de fluide frigorigène hors de la batterie d'échange thermique 35 à une entrée 38 pour ce fluide frigorigène dans la batterie d'échange thermique 35, un compresseur 39 et un condenseur 40 raccordé à un circuit 41 d'évacuation de calories, d'une façon connue d'un Homme du métier.

Les ventilateurs 4 et 34 ainsi que la machine frigorifique 36 sont commandés, par exemple de façon automatique en fonction d'un programme mémorisé dans une électronique de commande et de contrôle 42, sous l'influence de capteurs 43 tels qu'un capteur de température dans le local à réfrigérer, et d'une horloge 45, et/ou au moyen d'une commande manuelle 44, par exemple selon le cycle suivant.

Les ventilateurs 4 et 34 de même que le compresseur 39 de la machine frigorifique 36 étant supposés fonctionner à l'électricité, fournie à un tarif préférentiel à certaines heures de la nuit ou de la semaine ou heures creuses et au tarif normal, plus coûteux, hors de ces heures creuses, on produit de la glace à l'intérieur du bac 5, afin d'y accumuler des frigories, pendant les heures creuses ; à cet effet, alors que le ventilateur 4 est à l'arrêt, la machine frigorifique 36 fonctionne de même que le ventilateur 34, si bien que de l'air réfrigéré à sa traversée de la batterie d'échange thermique 35 parcourt les différents tubes 12 de bas en haut en se déchargeant de ses frigories au bénéfice de l'eau présente dans les espaces 27, laquelle se transforme en glace.

Hors des heures creuses, le compresseur 39 est normalement arrêté, et le ventilateur 4, à vitesse variable ou non, fonctionne, de façon commandée en fonction des besoins, pour faire traverser le bac 5 par l'air à réfrigérer, par l'intermédiaire des tubes 9 parcourus dans le sens longitudinal 3, et réfrigérer cet air au passage, par échange thermique avec la glace présente dans les espaces 27 par l'intermédiaire de l'air réfrigéré circulant en permanence dans les tubes 12 sous l'action du ventilateur 34, avant de l'injecter à l'état réfrigéré dans le local d'utilisation ; avantageusement, le ventilateur 34 est un ventilateur à vitesse variable permettant de moduler l'échange entre l'air à réfrigérer et la glace, et donc de stabiliser la température de cet air, à sa sortie du bac 5, en fonction des frigories accumulées dans celui-ci ; en cas de besoin, si la demande de froid au niveau du local ou de la machine d'utilisation excède la charge du bac 5 en frigories, un complément de puissance peut être assuré par redémarrage du compresseur 39.

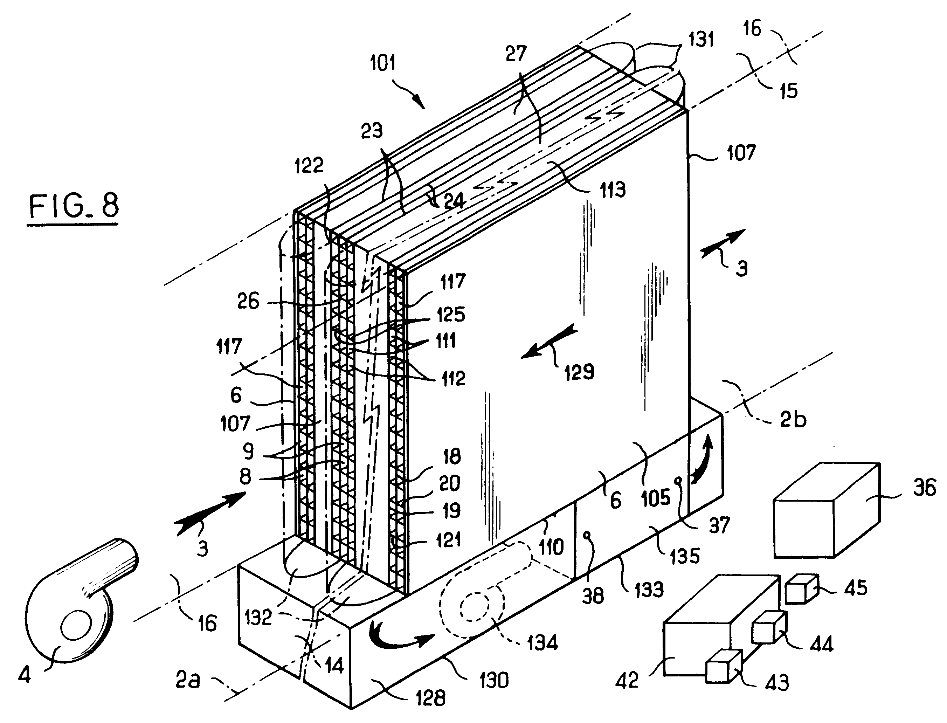

Naturellement, des conceptions différentes du bac 5 pourraient également convenir à un tel fonctionnement et on a illustré à la figure 8 un exemple non limitatif d'une telle conception.

On a repris à la figure 8 les mêmes références numériques qu'aux figures 1 à 3 pour désigner des composants identiques à ceux qui ont été décrits en référence à ces figures 1 à 3, et des références incrémentées de 100 par rapport aux références utilisées aux figures 1 à 3 pour désigner des composants qui, tout en correspondant à des composants décrits en référence aux figures 1 à 3, présentent une conception plus ou moins différente.

On trouve ainsi à la figure 8 les références numériques 101, 2a, 2b, 3, 4, 105, 6, 107, 8, 9, 110, 111, 112, 113, 14, 15, 16, 117, 18, 19, 20, 121, 122, 23, 24, 125, 26, 27, 128, 129, 130, 131, 132, 133, 134, 135, 36, 37, 38, 42, 43, 44, 45, pour désigner des composants correspondant, dans ces conditions, aux composants décrits respectivement sous les références numériques 1 à 38 et 42 à 45 à propos des figures 1 à 3.

Les différences entre les dispositifs de réfrigération 101 illustrés à la figure 8 et le dispositif de réfrigération 1 illustré aux figures 1 à 3 résultent essentiellement de différences entre le bac 105 illustré à la figure 8 et le bac 5 illustré aux figures 1 à 3.

En effet, dans le bac 105, au lieu d'être verticales comme les cloisons 21 et 25, les cloisons 121 et 125 sont horizontales, si bien que dans chaque groupe 117, 122, les tubes 112 du faisceau 111 ou des faisceaux 111, respectivement, sont eux-mêmes horizontaux et débouchent non pas dans la paroi de fond 110 du bac 105, alors continue, et dans la face d'extrémité supérieure 113 de ce bac 105, alors fermée de façon étanche au-dessus de chacun des groupes 117, 122, mais dans les parois frontales 107 du bac 105 qui ne sont alors fermées, de façon étanche, qu'en regard des espaces 27 de production et de stockage de glace.

De ce fait, les tubes 112 des faisceaux tubulaires plats 111 guident le fluide réfrigéré selon une trajectoire horizontale à l'intérieur du bac 105.

De préférence, ce parcours s'effectue à contre-courant du parcours du fluide à réfrigérer, c'est-à-dire dans un sens horizontal 129 opposé au sens 3.

A cet effet, à la face frontale 107 tournée vers l'aval en référence au sens 3 est accolé un collecteur d'entrée 131 pour le fluide réfrigéré, sous forme d'une pluralité de goulottes verticales, fermées à leur extrémité supérieure, débouchant à leur extrémité inférieure dans une gaine horizontale 133 définie par un carter 130 accolé à la paroi 110 du bac 105 et, de façon localisée à proximité immédiate de celui-ci, à la paroi inférieure 14 des tronçons 2a et 2b. Dans l'exemple illustré, chacune des goulottes 131 chevauche un espace 27 respectif de façon à communiquer, de façon étanche, avec les tubes 112 des faisceaux 111 jouxtant immédiatement celui-ci, naturellement en laissant les faisceaux 8 en libre communication avec le tronçon 2a, mais on pourrait également prévoir d'autres modes de réalisation, selon lesquels, par exemple, une goulotte serait prévue pour chaque faisceau 111 respectivement.

De même, à la face frontale 107 du bac 105 tournée vers l'amont en référence au sens 3 est accolé un collecteur de sortie 132, sous forme de goulottes verticales en tout point identiques aux goulottes définissant le collecteur d'entrée 131 et notamment, comme ces dernières, fermées vers le haut alors qu'elles débouchent vers le bas dans la gaine 133 ; comme les goulottes définissant le collecteur d'entrée 131, ces goulottes, qui n'entravent pas la communication des faisceaux 8 avec le tronçon 2a, sont respectivement communes à deux faisceaux 111 disposés respectivement de part et d'autre d'un même espace 27 dans l'exemple illustré mais, comme les goulottes définissant le collecteur d'entrée 131, pourraient également présenter une conception différente.

Le carter 130, par la gaine 133, les collecteurs d'entrée 131 et de sortie 132, et les faisceaux 111 définissent ainsi un circuit fermé 128 que l'air, réfrigéré à la traversée d'une batterie d'échange thermique 135 en tout point analogue à la batterie d'échange thermique 35 mais disposée à l'intérieur du carter 130, parcourt sous l'action d'un ventilateur de circulation 134 en tout point analogue au ventilateur de circulation 34 mais disposé à l'intérieur du carter 130.

On remarquera que le fait que les tubes 9 véhiculant le fluide à réfrigérer, tel que de l'air, ne soient pas placés au contact direct de la glace présente dans les espaces 27, mais soient dans une certaine mesure isolés thermiquement de cette glace par les tubes 12 ou 112 qui, généralement, véhiculent le fluide réfrigéré simultanément au passage de fluide à réfrigérer par les tubes 9, permet d'éviter dans une large mesure la condensation de l'humidité éventuellement contenue dans le fluide à réfrigérer, et les déperditions de puissance frigorifique qui s'ensuivraient ; la condensation éventuelle peut être suffisamment faible pour être entraînée avec le flux de fluide à réfrigérer ; cependant, il peut être préférable, comme on l'a schématisé aux figures 1 et 2, de prévoir immédiatement en aval du bac 5 en référence au sens 3 du flux de fluide à réfrigérer, au niveau de la paroi de fond 10 du bac 5 ou de la paroi de fond 110 du bac 105, de façon toutefois non illustrée, une goulotte 46 approximativement horizontale s'étendant de l'une à l'autre des parois latérales 6 du bac, c'est-à-dire sous les embouchures respectives de tous les tubes 9 de tous les faisceaux 8, pour recueillir les condensats et les évacuer vers l'extérieur du bac 5 et du tronçon 2b, et notamment à l'égout.

Dans la mesure où le fluide réfrigéré évolue quant à lui en circuit fermé 28 ou 128, on peut limiter son hygrométrie de telle sorte qu'il n'y ait pas de risque de condensation à l'intérieur de ce circuit fermé 28 ou 128.

Les conceptions du bac à glace 5 ou 105 qui viennent d'être décrites en référence aux figures 1 à 3 et à la figure 8 sont donc particulièrement adaptées au cas où l'on cherche à éviter la formation de condensats dans le fluide à traiter, mais on peut également concevoir le bac à glace d'un dispositif du type proposé dans la demande de brevet précitée de telle sorte qu'au contraire, il se produise dans le fluide à traiter une condensation de l'humidité éventuellement charriée par ce fluide, afin d'assurer une déshumidification commandée de celui-ci. Ainsi, si le dispositif de ce type tel qu'il a été décrit en référence aux figures 1 à 3 ou à la figure 8 convient plus particulièrement au cas où le fluide à réfrigérer peut charrier des quantités éminamment variables d'humidité, comme ce peut être le cas lorsqu'il s'agit d'air prélevé dans un local pour y être réinjecté après réfrigération, simplement pour assurer le refroidissement du local considéré, on va décrire à présent un dispositif de ce type plus particulièrement adapté non seulement au refroidissement d'un fluide à réfrigérer mais également à la déshumidification de celui-ci, par formation de condensats dans le bac à glace.

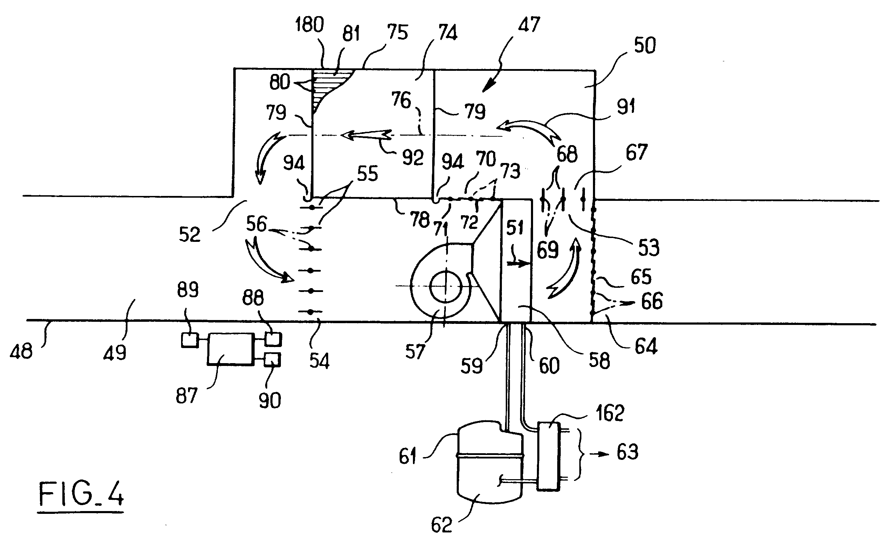

Aux figures 4 à 6, on a désigné par 47 le dispositif du type proposé dans la demande de brevet précitée, logé pour partie à l'intérieur d'une gaine 48 définissant un circuit principal 49 de fluide à réfrigérer et déshumidifier, et pour partie dans une dérivation localisée 50 de cette gaine 48 ou de ce circuit principal 49 ; le circuit principal 49 est destiné à être parcouru dans un sens déterminé 51 par le fluide à réfrigérer et déshumidifier, tel que de l'air, lequel provient par exemple de l'intérieur d'un local et/ou de l'extérieur et est destiné à être réinjecté dans ce local ou injecté dans une machine après réfrigération et déshumidification.

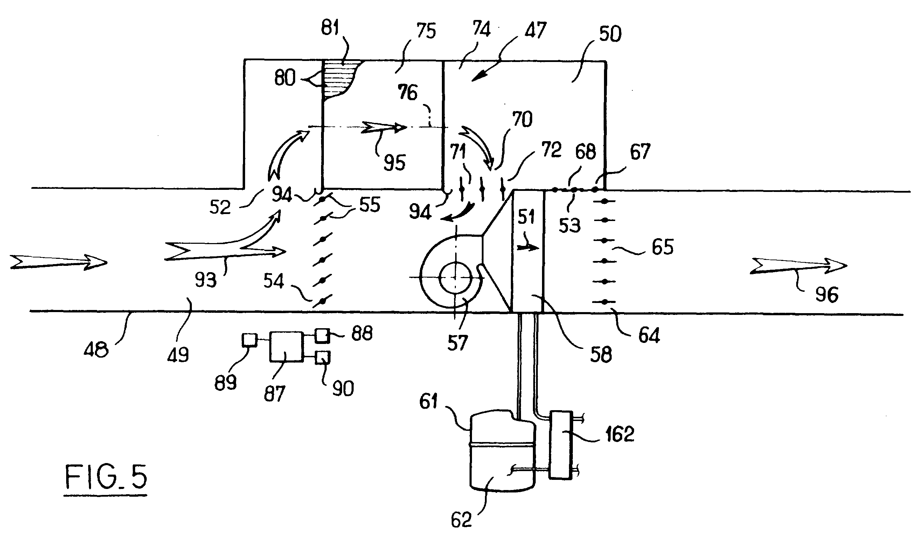

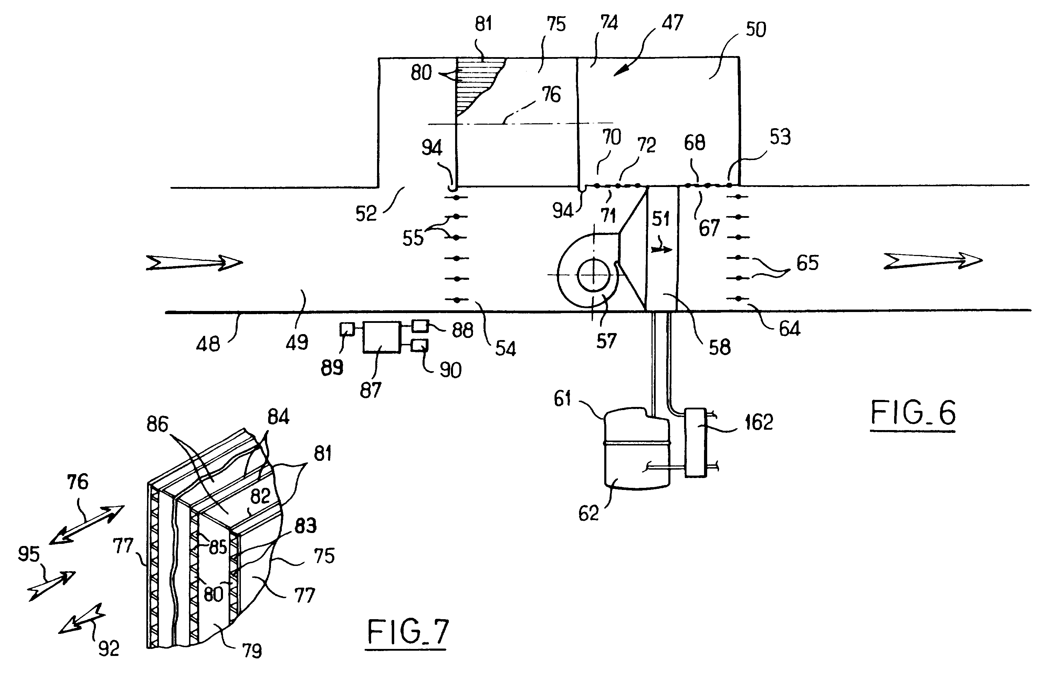

En référence au sens 51, ce circuit principal 49 ou la gaine 48 présente successivement une embouchure amont 52 de la dérivation 50 et une embouchure aval 53 de cette dérivation 50. Immédiatement en aval de l'embouchure 52, c'est-à-dire notamment en amont de l'embouchure 53, la gaine 48 présente intérieurement des moyens d'obturation commandée 54 se présentant par exemple sous la forme de registres 55 susceptibles de pivoter de façon commandée, à l'intérieur de la gaine 48, autour d'axes horizontaux respectifs 56 entre une position, illustrée aux figures 4 et 5, dans laquelle ils dégagent totalement la section de passage de la gaine 48, au moins une position illustrée à la figure 6 dans laquelle ils obturent partiellement cette section de passage et, éventuellement, une position non illustrée dans laquelle ils obturent totalement la section de passage.

Egalement en référence au sens 51, la gaine 48 comporte successivement de l'amont vers l'aval, entre les moyens d'obturation commandée 54 et l'embouchure 53 de la dérivation 50, un ventilateur de circulation 57 de préférence à vitesse variable de façon commandée, provoquant une circulation du fluide à réfrigérer et déshumidifier de l'amont vers l'aval, et une batterie d'échange thermique 58 orientée perpendiculairement au sens 51 et occupant la totalité de la-section de la gaine 48 ainsi que du refoulement du ventilateur 57 pour assurer un échange thermique entre le fluide à réfrigérer et déshumidifier qui la traverse sous l'effet du ventilateur 57, d'une part, et un fluide frigorigène circulant d'une part dans cette batterie d'échange thermique 58 et d'autre part à l'extérieur de celle-ci, entre une sortie 59 de ce fluide frigorigène et une entrée 60 de ce fluide frigorigène, dans une machine frigorifique 61 comportant notamment un compresseur 62 et un condenseur 162 par ailleurs raccordé à un circuit 63 d'évacuation de calories, d'une façon connue d'un Homme du métier. En outre, immédiatement en aval de l'embouchure 53 de la dérivation 50 si l'on se réfère au sens 51, la gaine 48 présente des moyens 64 d'obturation commandée du circuit principal 49, lesquels moyens 64 se présentent par exemple comme les moyens 54 sous la forme de registres 65 susceptibles d'évoluer de façon commandée, par pivotement autour d'axes horizontaux respectifs 66, entre une position d'obturation totale de la gaine 48 et du circuit principal 49, illustrée à la figure 4, et une position d'ouverture totale, dans laquelle ils dégagent totalement la section de la gaine 48 en vue du passage du fluide de l'amont vers l'aval, comme on l'a illustré aux figures 5 et 6.

En outre sont prévus des moyens 67 d'obturation commandée de l'embouchure 53 de la dérivation 50, par exemple sous la forme de registres 68 pivotant de façon commandée, autour d'axes 69 ici horizontaux compte tenu d'un positionnement de la dérivation 50 immédiatement au-dessus de la gaine 48, entre une position d'ouverture totale de l'embouchure 53, entre la dérivation 50 et la gaine 48 ou le circuit principal 49, comme le montre la figure 4, et une position d'obturation totale de l'embouchure 53, empêchant tout passage de fluide entre la dérivation 50 et la gaine 48 ou le circuit principal 49, comme on l'a illustré aux figures 5 et 6.

De plus, la dérivation 50 est susceptible de communiquer avec la gaine 48 et le circuit principal 49 non seulement par ses embouchures amont 52 et aval 53, mais également par des moyens de communication présentant la forme d'une embouchure auxiliaire 70 vers la gaine 48 et le circuit principal 49, immédiatement en amont de la batterie d'échange thermique 58 si l'on se réfère au sens 51 et de façon à ne pouvoir communiquer avec cette batterie d'échange thermique 58 qu'à travers le ventilateur de circulation 57, c'est-à-dire fonctionnellement entre l'embouchure amont 52 et l'aspiration de ce ventilateur 57. Cette embouchure auxiliaire 70 est munie, comme l'embouchure 53, de moyens d'obturation commandée 71 qui présentent dans l'exemple illustré la forme de registres 72 susceptibles de pivoter, de façon commandée, autour d'axes horizontaux 73 entre une position dans laquelle ils obturent totalement l'embouchure 70 comme le montrent les figures 4 et 5 et une position dans laquelle ils dégagent totalement cette embouchure 70 comme le montre la figure 6.

Entre l'embouchure amont 52 et l'embouchure auxiliaire 70, la dérivation 50 présente une zone horizontale 74, susceptible d'être parcourue horizontalement par le fluide à réfrigérer et déshumidifier comme il apparaîtra plus loin, laquelle zone horizontale 74 présente une section de préférence carrée, intégralement occupée par un bac 75 de fabrication et de stockage de glace qui va être décrit à présent plus particulièrement en référence à la figure 7.

Si l'on considère comme référence de longitudinalité une direction horizontale 76 de parcours de la zone horizontale 74 de la dérivation 50 entre l'embouchure amont 52 et l'embouchure aval 53 ou l'embouchure auxiliaire 70, laquelle direction 76 est avantageusement parallèle au sens 51 de parcours du circuit principal 49 par le fluide à réfrigérer et déshumidifier, le bac 75 est délimité par deux parois latérales plates 77, mutuellement parallèles, verticales et longitudinales, isolées thermiquement et définissant avantageusement des parois de la dérivation 50, ainsi que par une paroi de fond 78 également plate et longitudinale mais horizontale, isolée thermiquement et pouvant avantageusement constituer une paroi de délimitation entre la dérivation 50 et la gaine 48 ou le circuit principal 49 ; il est en outre délimité par deux parois frontales 79 plates, mutuellement parallèles, verticales et plus précisément transversales. Vers le haut, le bac 75 est obturé par une paroi supérieure 180 plate, longitudinale et horizontale, qui peut avantageusement être isolée thermiquement et se confondre avec une paroi de la dérivation 50.

Les parois 77, 78, 79 sont étanches et se raccordent mutuellement de façon étanche ; la paroi 180, également étanche, ne se raccorde de façon étanche qu'aux parois latérales 77 mais laisse subsister un jeu vertical vis-à-vis des parois frontales 79 de telle sorte que le bac 75 soit ouvert vers le haut à l'intérieur de la dérivation 50, de façon non visible aux figures mais aisément concevable par un Homme du métier.

Comme les parois frontales 7 du bac 5, les parois frontales 79 du bac 75 présentent, suivant des alignements verticaux avantageusement régulièrement répartis de l'une à l'autre des parois latérales 77, des embouchures de tubes longitudinaux 80 de faisceaux tubulaires respectifs 81 plats, à la fois longitudinaux et verticaux, s'étendant d'une part verticalement de la paroi de fond 78 du bac 75 à la paroi supérieure 180 de celui-ci et d'autre part longitudinalement de l'une à l'autre des parois frontales 79.

Chacun des faisceaux tubulaires plats 81 présente avantageusement une structure identique à celle de l'un, respectif, des faisceaux tubulaires plats 8 décrits en référence à la figure 3.

En d'autres termes, deux de ces faisceaux jouxtent directement les parois latérales 77 du bac 75 et sont définis respectivement par cette paroi latérale 77, par une paroi plate 82 étanche, parallèle à cette paroi 77 et se raccordant de façon étanche aux parois 78, 79 et 80, ainsi que par des cloisons longitudinales plates 83 horizontales, étanches, raccordant mutuellement les parois 77 et 82 en définissant avec elles les tubes 80. Entre ces faisceaux 81 extrêmes sont disposés plusieurs faisceaux 81 intermédiaires dont un seul est illustré à la figure 7, chacun de ces faisceaux 81 intermédiaires étant défini par deux parois plates 84 mutuellement parallèles, à la fois longitudinales et verticales, étanches et se raccordant de façon étanche à chacune des parois 78 et 80, ces deux parois 84 étant raccordées mutuellement par des cloisons 85 en tout point identiques aux cloisons 83 et s'étendant longitudinalement, comme ces dernières, de l'une à l'autre des parois frontales 79 du bac 75.

Naturellement, les tubes 80 sont calibrés, notamment par espacement mutuel approprié des parois 82 et 83 ainsi que des parois 84, de façon à offrir une section transversale de passage convenant pour le fonctionnement qui sera décrit ultérieurement.

En outre, les parois 84 de deux faisceaux 81 voisins, ainsi que la paroi 82 de chaque faisceau 81 adjacent à une paroi latérale 77 du bac et la paroi 84 du faisceau 81 immédiatement voisin, sont écartées mutuellement de façon à préserver entre les faisceaux 81 des espaces 86 fermés de façon étanche, sauf vers je haut entre les parois frontales 79 et la paroi supérieure 80, et destinés à recevoir de l'eau elle-même destinée à accumuler des frigories en se transformant en glace pour pouvoir restituer ces frigories en fondant, selon une séquence qui va être décrite à présent et qui peut être commandée en fonction d'un programme mémorisé dans une électronique de commande 87, sous l'influence de capteurs 88 tels que des capteurs de température et d'humidité dans le local ou la machine à alimenter en fluide réfrigéré et déshumidifié, tel que de l'air, d'une horloge 89 prenant en compte notamment les heures creuses pendant lesquelles l'énergie électrique alimentant le ventilateur 57 et le compresseur 62 est moins coûteuse, et/ou d'une commande manuelle 90.

La figure 4 illustre l'état du dispositif selon l'invention 47 correspondant à la fabrication et au stockage de glace dans le bac 74 en heures creuses.

Dans cet état, les registres 55 et 68 sont en position d'ouverture totale respectivement du circuit principal 49 à l'intérieur de la gaine 48 et de l'embouchure aval 53 de la dérivation 50, alors que les registres 65 et 72 sont en position de fermeture totale respectivement du circuit principal 49 à l'intérieur de la gaine 48 et de l'embouchure auxiliaire 70 de la dérivation 50. Le compresseur 62 est alimenté en électricité si bien qu'il provoque une circulation de fluide frigorigène, porté à basse température, dans la batterie d'échange thermique 58 et le ventilateur de circulation 57 est lui-même alimenté en électricité si bien qu'il provoque une circulation du fluide fourni à la gaine 48, c'est-à-dire du fluide à réfrigérer et déshumidifier lui-même, selon un circuit fermé 91 qui, successivement, lui fait traverser dans le sens 51 successivement les moyens d'obturation commandés 54, le ventilateur 57, la batterie d'échange thermique 58 au niveau de laquelle ce fluide se charge de frigories et se transforme donc en fluide réfrigéré avant d'être dévié vers l'embouchure aval 53 de la dérivation 50 par les registres 65 en position de fermeture et parcourir la zone horizontale 74 de la dérivation 50, c'est-à-dire les tubes 80 du bac 75, en sens longitudinal 92 opposé au sens 51 ; au passage du bac 75, le fluide réfrigéré au passage de la batterie d'échange thermique 58 fournit des frigories à l'eau qui se trouve dans les espaces 86 et qui gèle de ce fait ; ensuite, le fluide sort du bac 75 en s'étant réchauffé puis franchit l'embouchure amont 52 de la dérivation 50 pour revenir au ventilateur de circulation 57 à travers les moyens d'obturation commandée 54.

Les frigories ainsi accumulées sous forme de glace dans le bac 75 peuvent être ensuite restituées en dehors des heures creuses, comme on va le décrire à présent en référence à la figure 5.

Sur cette figure, le dispositif 47 se trouve dans un état dans lequel les registres 55 occupent une position de fermeture partielle du circuit principal 49, à l'intérieur de la gaine 48, pour obliger le fluide à réfrigérer et déshumidifier, fourni à cette dernière, à se répartir entre le circuit principal 49 et la dérivation 50 comme on l'a schématisé en 93, les registres 72 sont en position d'ouverture totale de l'embouchure 70 alors que les registres 68 sont en position d'obturation totale de l'embouchure 53 de façon à obliger le fluide passant par la dérivation 50 à revenir dans le circuit principal 49 par l'embouchure 70, au niveau de l'aspiration du ventilateur 57, après avoir franchi le bac 75 par les tubes 80, pour franchir ensuite la batterie d'échange thermique 58, et les registres 65 sont en position d'ouverture totale du circuit principal 49 à l'intérieur de la gaine 48. Dans ces conditions, le fluide à réfrigérer et déshumidifier traverse, dans une proportion réglée par orientation convenable des registres 55 de façon à obturer plus ou moins le circuit principal 49 à l'intérieur de la gaine 48 et par action du ventilateur 57, sous la commande de l'électronique de commande 87, les tubes 80 du bac 75, dans un sens longitudinal 95 opposé au sens 92, pour y être déshumidifié et réfrigéré, alors que la partie restante reste dans le circuit principal 49 où elle est également soumise à l'action du ventilateur 57 ; au passage des tubes 80, le fluide à réfrigérer et déshumidifié se refroidit et libère de l'eau sous forme de condensats qui sont repris par des goulottes appropriées 94 disposées transversalement, approximativement horizontalement, en bas de chacune des parois frontales 79, de l'une à l'autre des parois latérales 77, et débouchent à l'extérieur de la dérivation 50 comme de la gaine 48 par exemple vers l'égout ; les deux parties ainsi initialement dissociées du fluide à réfrigérer et déshumidifier se rejoignent à l'aspiration du ventilateur 57, immédiatement en amont de la batterie d'échange thermique 58, en référence au sens 51, et peuvent recevoir au niveau de cette batterie d'échange thermique 58 un complément de refroidissement, le compresseur 62 étant éventuellement mis en route à cet effet par l'électronique de commande 87, en fonction des besoins ; ensuite, le fluide poursuit sa progression dans le circuit principal 49 comme on l'a schématisé par une flèche 96 à la figure 5.

Naturellement, comme le montre la figure 6, le dispositif 47 peut également être neutralisé notamment lorsqu'une déshumidification du fluide n'est pas nécessaire, ce qui peut être constaté par les capteurs 88. Alors, les registres 55 et 65 sont placés en position d'ouverture totale du conduit principal 49, à l'intérieur de la gaine 48 alors que les registres 72 et 68 sont placés en position d'obturation totale respectivement de l'embouchure auxiliaire 70 et de l'embouchure amont 53 si bien que le fluide à réfrigérer, alors sans déshumidification, ne s'engage pas dans la dérivation 50 mais transite intégralement par le circuit principal 49, le ventilateur de circulation 57 et la batterie d'échange thermique 58 dans laquelle il reçoit éventuellement un apport de frigories en provenance du compresseur 62, mis en route si nécessaire par l'électronique de commande 87.

Le dispositif 47 fonctionne alors comme une installation conventionnelle de refroidissement et de déshumidification, dans laquelle non seulement le refroidissement mais également la déshumidification sont assurés au passage d'une batterie d'échange thermique comparable à la batterie d'échange thermique 58. On conçoit cependant aisément que, pour un même apport de frigories, c'est-à-dire pour un même refroidissement et une même déshumidification d'un fluide présentant initialement une température et une hygrométrie déterminées, l'utilisation du dispositif 47 dans les conditions décrites en référence aux figures 4 et 5, alternativement, selon que l'on se trouve en heures creuses où l'on a en principe pas besoin de fluide réfrigéré et déshumidifié ou en dehors des heures creuses où ce besoin apparaît, permet non seulement de réaliser des économies d'énergie en ne consommant de l'énergie qu'au moment où elle est la moins coûteuse, mais également de réduire la puissance et l'encombrement de la machine frigorifique 61 en comparaison avec une machine frigorifique qui, en l'absence de bac 75 de production et de stockage de glace, devrait être en mesure de répondre à chaque instant aux besoins en frigories de refroidissement et de déshumidification. En outre, lorsque la déshumidification est assurée au passage d'un bac à glace 75, la batterie d'échange thermique 58 n'a aucune rôle de déshumidification, mais uniquement un rôle de refroidissement, ce qui permet de la faire travailler à des températures comparativement supérieures et de faire fonctionner la machine frigorifique 61 dans des conditions optimales de rendement.

Naturellement, les deux applications qui viennent d'être décrites ne constituent que des exemples non limitatifs, et un Homme du métier pourra prévoir d'autres applications sans sortir pour autant du cadre de l'invention revendiquée ci-dessous.

## Revendications

1. Bac de production et de stockage de glace, comportant des moyens de circulation (50, 81) pour faire circuler dans le bac (75) un fluide réfrigéré et un fluide à réfrigérer en les plaçant en relation d'échange thermique avec la glace, lesdits moyens de circulation (50, 81) comportant au moins un faisceau tubulaire plat (81) constitué d'une pluralité de tubes (80) de passage de fluide, présentant une même orientation, mutuellement accolés suivant une direction perpendiculaire à cette orientation, et des moyens (50) pour faire parcourir lesdits tubes (80) dans un même sens par le fluide à réfrigérer,
caractérisé en ce que lesdits moyens (50) sont également apte à faire parcourir lesdits tubes (80) en parallèle et dans un même sens par le fluide réfrigéré, en alternance avec le fluide à réfrigérer, et en ce que ledit faisceau tubulaire plat (81) traverse le bac (75) en y délimitant, par au moins une paroi (82, 84), au moins un espace (86) de production et de stockage de la glace, avec laquelle cette paroi (82, 84) est en contact.

2. Bac selon la revendication 1, caractérisé en ce qu'il comporte une pluralité desdits faisceaux (81), disposés mutuellement parallèlement de telle sorte que les orientations des tubes respectifs (80) soient identiques et raccordés mutuellement par des moyens collecteurs (50), en délimitant deux à deux, par une paroi (82, 84) respective, un tel espace (86) de production et de stockage de la glace, avec laquelle cette paroi respective (82, 84) est en contact.

3. Bac selon l'une quelconque des revendications 1 et 2, caractérisé en ce que le ou chaque faisceau tubulaire plat (81) est défini par deux parois plates (77, 82, 84) mutuellement parallèles, dont l'une au moins délimite un tel espace (86) de production et de stockage de la glace, avec laquelle cette paroi (82, 84) est en contact, et qui sont raccordées mutuellement par des cloisons (83, 85) mutuellement parallèles définissant avec elles les tubes (80) de passage de fluide.

4. Bac selon l'une quelconque des revendications 1 à 3, caractérisé en ce qu'il comporte des moyens (74) d'évacuation des condensats du faisceau (81), respectivement des faisceaux (81).

5. Bac de production et de stockage de glace, comportant des moyens de circulation (11, 111, 8, 31, 32, 131, 132, 2a, 2b) pour faire circuler dans le bac (5, 105) un fluide réfrigéré et un fluide à réfrigérer en les plaçant en relation d'échange thermique avec la glace, lesdits moyens de circulation (11, 111, 8, 31, 32, 131, 132, 2a, 2b) comportant au moins un groupe (17, 22, 117, 122) comportant un premier faisceau tubulaire plat (8) constitué d'une pluralité de tubes (9) de passage de fluide présentant une même orientation et mutuellement accolés suivant une direction perpendiculaire à cette orientation, et des moyens (2a, 2b) pour faire parcourir les tubes (9) du premier faisceau (8) en parallèle, dans un même sens, par le fluide à réfrigérer,
caractérisé en ce que ledit groupe (17, 22, 117, 122) comporte en outre au moins un deuxième faisceau tubulaire plat (11, 111) accolé audit premier faisceau tubulaire plat (8) et constitué d'une pluralité de tubes (12, 112) de passage de fluide présentant une même orientation et mutuellement accolés suivant une direction perpendiculaire à cette orientation, de façon à recouvrir le premier faisceau (8), en ce que lesdits moyens de circulation (11, 111, 8, 31, 32, 131, 132, 2a, 2b) comportent en outre des moyens (31, 32, 131, 132) pour faire parcourir les tubes (12, 112) du deuxième faisceau (11, 111), au nombre d'au moins un, en parallèle, dans un même sens, par le fluide réfrigéré, et en ce que les faisceaux (11, 111, 8) dudit groupe traversent le bac (5, 105) en y délimitant, par au moins une paroi (19, 23) du deuxième faisceau tubulaire plat (11, 111), au nombre d'au moins un, au moins un espace (27) de production et de stockage de la glace, avec laquelle cette paroi (19, 23) est en contact.

6. Bac de production selon la revendication 5, caractérisé en ce que ledit groupe (17, 22, 117, 122) comporte deux faisceaux tubulaires plats (8, 11, 111), à savoir un unique deuxième faisceau tubulaire plat (11, 111) pour le fluide réfrigéré, intercalé entre le premier faisceau tubulaire plat (8) pour le fluide à réfrigérer et l'espace (27) de production et de stockage de glace et comportant ladite paroi (19, 23) jouxtant et délimitant cet espace (27).

7. Bac de production selon la revendication 5, caractérisé en ce que ledit groupe (22, 122) comporte trois faisceaux tubulaires plats (8, 11, 111), à savoir le premier faisceau tubulaire plat (8) pour le fluide à réfrigérer, intercalé entre deux deuxièmes faisceaux tubulaires plats (11, 111) pour le fluide réfrigéré, comportant ladite paroi respective (19, 23), jouxtant et délimitant un espace (27) respectif de production et de stockage de glace.

8. Bac de production selon l'une quelconque des revendications 5 à 7, caractérisé en ce qu'il comporte une pluralité desdits groupes (17, 22, 117, 122), disposés mutuellement parallèlement de telle sorte que les deuxièmes faisceaux (11, 111) pour le fluide réfrigéré présentent la même orientation et que les premiers faisceaux (8) pour le fluide à réfrigérer présentent la même orientation, et en ce que les deuxièmes faisceaux (11, 111) pour le fluide réfrigéré sont raccordés mutuellement par des moyens (31, 32, 131, 132) collecteurs de fluide réfrigéré et les premiers faisceaux (8) pour le fluide à réfrigérer sont raccordés mutuellement par des moyens (2a, 2b) collecteurs de fluide à réfrigérer.

9. Bac de production selon la revendication 8, caractérisé en ce qu'il comporte au moins une paroi latérale (6) plate, et, le long de celle-ci, entre celle-ci et un tel espace (27) de production et de stockage de glace, un groupe (17) de deux faisceaux tubulaires plats (8, 11, 111), à raison d'un unique deuxième faisceau tubulaire plat (11, 111) pour le fluide réfrigéré, comportant ladite paroi (19) jouxtant et délimitant ledit espace (27) de production et de stockage de glace, et d'un premier faisceau tubulaire plat (8) pour le fluide à réfrigérer, jouxtant ladite paroi latérale (10).

10. Bac de production selon l'une quelconque des revendications 8 et 9, caractérisé en ce qu'il comporte au moins deux parois latérales (6) plates, mutuellement parallèles, et, entre celles-ci, au moins un groupe (22) de trois faisceaux tubulaires plats (8, 11, 111), parallèles auxdites parois latérales (6) et définissant respectivement vers l'une et l'autre de celles-ci un tel espace (27) de production et de stockage de glace, et en ce que ledit groupe (22) comporte un premier faisceau tubulaire plat (8) pour le fluide à réfrigérer, intercalé entre deux deuxièmes faisceaux tubulaires plats (11, 111) pour le fluide réfrigéré, dont chacun comporte ladite paroi respective (23) jouxtant et délimitant un espace (27) respectif de production et de stockage de glace.

11. Bac de production selon l'une quelconque des revendications 6 et 9, caractérisé en ce que ledit groupe (17, 22, 117, 122) de deux faisceaux tubulaires plats (8, 11, 111) est défini par trois parois plates (6, 18, 19) mutuellement parallèles, raccordées mutuellement par des cloisons (20, 21) mutuellement parallèles définissant les tubes des faisceaux (8, 11, 111) entre les parois (6, 18, 19), l'une desdites parois constituant ladite paroi (19) jouxtant et délimitant ledit espace (27) de production et de stockage de la glace.

12. Bac de production selon l'une quelconque des revendications 7 et 10, caractérisé en ce que ledit groupe (22) de trois faisceaux tubulaires plats (8, 11, 111) est défini par quatre parois plates (23, 24) mutuellement parallèles, raccordées mutuellement par des cloisons (25, 125, 26) mutuellement parallèles définissant les tubes des faisceaux (8, 11, 111) entre les parois (23, 24), deux desdites parois constituant lesdites parois (23) jouxtant et délimitant lesdits espaces (27) de production et de stockage de glace.

13. Bac de production selon l'une quelconque des revendications 5 à 12, caractérisé en ce que les premier et deuxième(s) faisceaux (11, 8), respectivement pour le fluide à réfrigérer et pour le fluide réfrigéré, sont mutuellement croisés.

14. Bac de production selon l'une quelconque des revendications 5 à 12, caractérisé en ce que les premier et deuxième(s) faisceaux (111, 8), respectivement pour le fluide à réfrigérer et pour le fluide réfrigéré, présentent la même orientation et en ce que lesdits moyens de circulation (131, 132) comportent des moyens (2a, 2b, 131, 132) pour faire parcourir les premier et deuxième(s) faisceaux (111, 8) dans des sens (129, 3) mutuellement opposés par le fluide à réfrigérer et le fluide réfrigéré, respectivement.

15. Bac de production selon l'une quelconque des revendications 5 à 14, caractérisé en ce qu'il comporte des moyens (46) d'évacuation des condensats du premier faisceau (8), respectivement des premiers faisceaux (8), pour le fluide à réfrigérer.

## Patentansprüche

1. Behälter zur Erzeugung und zum Speichern von Eis, welcher Mittel (50, 81) für die Zirkulierung in einem Behälter (75) eines gekühlten Fluids und eines zu kühlenden Fluid aufweist, indem sie in Wärmetausch mit dem Eis versetzt werden, wobei diese Mittel für die Zirkulierung (50, 81) mindestens ein flaches Rohrbündel (81) aufweisen, welches aus einer Vielzahl von Rohren (80) für den Durchlauf des Fluids besteht, die die gleiche Ausrichtung haben und untereinander in senkrechter Richtung zu dieser Ausrichtung benachbart sind, sowie Mittel (50), die dafür sorgen, daß die Rohre (80) von dem zu kühlenden Fluid in der gleichen Richtung durchströmt werden,
**dadurch gekennzeichnet, daß**
diese Mittel (50) ebenfalls so ausgelegt sind, daß die Rohre (80) parallel in der gleichen Richtung abwechselnd von dem gekühlten Fluid und dem zu kühlenden Fluid durchströmt werden können, und dadurch, daß das flache Rohrbündel (81) den Behälter (75) durchquert und dort mittels mindestens einer Wand (82, 84) mindestens einen Raum (86) für die Erzeugung und die Speicherung von Eis bildet, mit dem diese Wand (82, 84) in Berührung steht.

2. Behälter nach Anspruch 1,
**dadurch gekennzeichnet, daß**
er eine Vielzahl dieser Rohrbündel (81) aufweist, welche untereinander parallel in einer Weise angeordnet sind, daß die Ausrichtung der einzelnen Rohre (80) identisch ist und sie untereinander mittels Sammelgefäßen (50) verbunden sind und paarweise mittels einer Wand (82, 84) einen Raum für die Erzeugung und die Speicherung von Eis bilden, mit dem die Wand (82, 84) in Kontakt steht.

3. Behälter nach einem der Ansprüche 1 oder 2,
**dadurch gekennzeichnet, daß**
das oder jedes Rohrbündel (81) von zwei parallelen flachen Wänden (77, 82, 84) definiert wird, von denen mindestens eine Wand einen solchen Raum (86) für die Erzeugung und das Speichern von Eis eingrenzt, mit dem diese Wand (82, 84) in Berührung steht, und die miteinander durch parallele Trennwände (83, 85) verbunden sind, welche zusammen mit diesen die Rohre (80) für den Durchlauf des Fluids definieren.

4. Behälter nach einem der Ansprüche 1 bis 3,
**dadurch gekennzeichnet, daß**
er Mittel (74) für den Ablauf der Kondensate aus dem oder den Rohrbündeln (81) aufweist.

5. Behälter für die Erzeugung und das Speichern von Eis mit Mitteln für die Zirkulierung (11, 111, 8, 31, 32, 131, 132, 2a, 2b), um in dem Behälter (5, 105) ein gekühltes Fluid und ein zu kühlendes Fluid zu zirkulieren, indem sie in Wärmetausch mit dem Eis versetzt werden, wobei diese Mittel für die Zirkulierung (11, 111, 8, 31, 32, 131, 132, 2a, 2b) mindestens eine Gruppe (17, 22, 117, 122) aufweisen, welche ein erstes flaches Rohrbündel (8) enthält, das aus einer Vielzahl von Rohren (9) für den Durchlauf des Fluids besteht, die die gleiche Ausrichtung haben und untereinander in senkrechter Richtung zu dieser Ausrichtung benachbart sind, sowie Mittel (2a, 2b), die dafür sorgen, daß die Rohre (9) des ersten Rohrbündels (8) parallel von dem zu kühlenden Fluid in der gleichen Richtung durchströmt werden,
**dadurch gekennzeichnet, daß**
diese Gruppe (17, 22, 117, 122) außerdem mindestens ein zweites Rohrbündel (11, 111) aufweist, welches mit dem ersten flachen Rohrbündel (8) benachbart ist und aus einer Vielzahl von Rohren (12, 112) für den Durchlauf des Fluids besteht, welche die gleiche Ausrichtung haben und untereinander in senkrechter Richtung zu dieser Ausrichtung benachbart sind, um das erste Rohrbündel (8) zu überdecken, und dadurch, daß die Mittel für die Zirkulierung (11, 111, 8, 31, 32, 131, 132, 2a, 2b) außerdem Mittel (31, 32, 131, 132) für die Durchströmung der Rohre (12, 112) des mindestens einen zweiten Rohrbündels (11, 111) parallel in einer gleichen Richtung durch das gekühlte Fluid aufweisen, und dadurch, daß die Rohrbündel (11, 111, 8) dieser Gruppe den Behälter (5, 105) durchqueren und dort mittels mindestens einer Wand (19, 23) des mindestens einen zweiten flachen Rohrbündels (11, 111) einen Raum (27) für die Erzeugung und das Speichern von Eis eingrenzen, mit dem diese Wand (19, 23) in Berührung steht.

6. Behälter nach Anspruch 5,
**dadurch gekennzeichnet, daß**
die Gruppe (17, 22, 117, 122) zwei flache Rohrbündel (8, 11, 111) aufweist, das heißt, ein einziges flaches Rohrbündel (11, 111) für das gekühlte Fluid, welches zwischen dem ersten flachen Rohrbündel (8) für das zu kühlende Fluid und dem Raum für die Erzeugung und das Speichern von Eis angeordnet ist und die Wand (19, 23) aufweist, welche an den Raum (27) anschließt und ihn eingrenzt.

7. Behälter nach Anspruch 5,
**dadurch gekennzeichnet, daß**
die Gruppe (22, 122) drei flache Rohrbündel (8, 11, 111) aufweist, das heißt, das erste flache Rohrbündel (8) für das zu kühlende Fluid, welches zwischen zwei flachen Rohrbündeln (11, 111) für das gekühlte Fluid angeordnet ist, die die jeweilige Wand (19, 23) aufweisen, welche an einen jeweiligen Raum (27) für die Erzeugung und das Speichern von Eis anschließt und ihn eingrenzt.

8. Behälter nach einem der Ansprüche 5 bis 7,
**dadurch gekennzeichnet, daß**
er eine Vielzahl dieser Gruppen (17, 22, 117, 122) aufweist, welche untereinander parallel so angeordnet sind, daß die zweiten Rohrbündel (11, 111) für das gekühlte Fluid die gleiche Ausrichtung haben, und die ersten Rohrbündel (8) für das zu kühlende Fluid die gleiche Ausrichtung haben, und dadurch, daß die zweiten Rohrbündel (11, 111) für das gekühlte Fluid untereinander mit Hilfe von Sammelbehältern (31, 32, 131, 132) für das gekühlte Fluid angeschlossen sind, und daß die ersten Rohrbündel (8) für das zu kühlende Fluid untereinander mit Hilfe von Sammelbehältern (2a, 2b) für das zu kühlende Fluid verbunden sind.

9. Behälter nach Anspruch 8,
**dadurch gekennzeichnet, daß**
er mindestens eine flache Seitenwand (6) aufweist, und, an dieser, zwischen dieser und einem Raum (27) für die Erzeugung und das Speichern von Eis, eine Gruppe (17) aus zwei flachen Rohrbündeln (8, 11, 111), das heißt, einem einzigen zweiten flachen Rohrbündel (11, 111) für das gekühlte Fluid, das die Wand (19) aufweist, welche an den Raum (27) für die Erzeugung und das Speichern von Eis anschließt und ihn eingrenzt, und einem ersten flachen Rohrbündel (8) für das zu kühlende Medium, welches an die Seitenwand (10) anschließt.

10. Behälter nach einem der Ansprüche 8 und 9,
**dadurch gekennzeichnet, daß**
er mindestens zwei flache parallele Seitenwände (6) und zwischen diesen mindestens eine Gruppe (22) aus drei flachen Rohrbündeln (8, 11, 111) aufweist, welche parallel zu diesen Seitenwänden (6) verlaufen und jeweils gegenüber diesen einen solchen Raum (27) für die Erzeugung und das Speichern von Eis bilden aufweist, und dadurch, daß diese Gruppe (22) ein erstes flaches Rohrbündel (8) für das zu kühlende Fluid aufweist, welches zwischen zwei zweiten flachen Rohrbündeln (11, 111) für das gekühlte Fluid angeordnet ist, die jeweils die Wand (23) aufweisen, welche an einen Raum (27) für die Erzeugung und das Speichern von Eis anschließt und ihn eingrenzt.

11. Behälter nach einem der Ansprüche 6 und 9,
**dadurch gekennzeichnet, daß**
die Gruppe (17, 22, 117, 122) aus zwei flachen Rohrbündeln (8, 11, 111) mittels drei flachen parallelen Wänden (6, 18, 19) gebildet wird, welche untereinander mit Hilfe von parallelen Trennwänden (20, 21) verbunden sind und die Rohre der Rohrbündel (8, 11, 111) zwischen den Wänden (6, 18, 19) bilden, wobei eine dieser Wände die Wand (19) bildet, welche an den Raum (27) für die Erzeugung und das Speichern von Eis anschließt und ihn eingrenzt.

12. Behälter nach einem der Ansprüche 7 bis 10,
**dadurch gekennzeichnet, daß**
die Gruppe (22) aus drei flachen Rohrbündeln (8, 11, 111) aus vier flachen parallelen Wänden (23, 24) besteht, die miteinander mit Hilfe von parallelen Trennwänden (25, 125, 26) verbunden sind, welche die Rohre der Rohrbündel (8, 11, 111) zwischen den Wänden (23, 24) bilden, wobei zwei dieser Wände die Wände (23) bilden, welche an den Raum (27) für die Erzeugung und das Speichern von Eis anschließen und ihn eingrenzen.

13. Behälter nach einem der Ansprüche 5 bis 12,
**dadurch gekennzeichnet, daß**
sich die ersten und zweiten jeweils für das zu kühlende Fluid und das gekühlte Fluid vorgesehenen Rohrbündel (11, 8) kreuzen.

14. Behälter nach einem der Ansprüche 5 bis 12,
**dadurch gekennzeichnet, daß**
die jeweils für das zu kühlende und das gekühlte Fluid vorgesehenen Rohrbündel (111, 8) die gleiche Ausrichtung haben, und dadurch, daß die Mittel für die Zirkulierung (131, 132) Mittel (2a, 2b, 131, 132) aufweisen, welche sicherstellen, daß die ersten und zweiten Rohrbündel (111, 8) in jeweils entgegengesetzter Richtung (129, 3) von dem zu kühlenden und dem gekühlten Fluid durchströmt werden können.

15. Behälter nach einem der Ansprüche 5 bis 14,
**dadurch gekennzeichnet, daß**
er Mittel (46) für die Ableitung der Kondensate aus dem oder den ersten Rohrbündeln (8) für das zu kühlende Fluid aufweist.

## Claims

1. Container for the production and storage of ice, comprising circulation means (50, 81) for causing a refrigerated fluid and a fluid to be refrigerated to circulate in the container (75) by putting them in a heat-exchange relationship with the ice, the said circulation means (50, 81) comprising at least one flat tube bundle (81) consisting of a plurality of fluid-passage tubes (80) having a same orientation and conjoined in a direction perpendicular to this orientation, and means (50) for causing the fluid to be refrigerated to flow through the said tubes (80) in a same direction, characterized in that the said means (50) are also capable of causing the refrigerated fluid to flow through the said tubes (80) in parallel and in a same direction alternately with the fluid to be refrigerated, and in that the said flat tube bundle (81) passes through the container (75), at the same time delimiting therein, by means of at least one wall (82, 84), at least one space (86) for the production and storage of the ice, with which this wall (82, 84) is in contact.

2. Container according to Claim 1, characterized in that it comprises a plurality of the said bundles (81), which are arranged parallel to one another, in such a way that the orientations of the respective tubes (80) are identical, and which are connected to one another by collector means (50), at the same time delimiting in pairs, by means of a respective wall (82, 84), such a space (86) for the production and storage of the ice, with which this respective wall (82, 84) is in contact.

3. Container according to either one of Claims 1 and 2, characterized in that the or each flat tube bundle (81) is defined by two flat walls (77, 82, 84) parallel to one another, at least one of which delimits such a space (86) for the production and storage of the ice, with which this wall (82, 84) is in contact, and which are connected to one another by means of partitions (83, 85) parallel to one another and defining with said walls the fluid-passage tubes (80).

4. Container according to any one of Claims 1 to 3, characterized in that it comprises means (74) for discharging condensates from the bundle (81) or from the bundles (81).

5. Container for the production and storage of ice, comprising circulation means (11, 111, 8, 31, 32, 131, 132, 2a, 2b) for causing a refrigerated fluid and a fluid to be refrigerated to circulate in the container (5, 105) by putting them into a heat-exchange relationship with the ice, the said circulation means (11, 111, 8, 31, 32, 131, 132, 2a, 2b) comprising at least one group (17, 22, 117, 122) comprising a first flat tube bundle (8) consisting of a plurality of fluid-passage tubes (9) having a same orientation and conjoined in a direction perpendicular to this orientation, and means (2a, 2b) for causing the fluid to be refrigerated to flow through the tubes (9) of the first bundle (8) in parallel in a same direction, characterized in that the said group (17, 22, 117, 122) comprises, furthermore, at least one second flat tube bundle (11, 111) joined to the said first flat tube bundle (8) and consisting of a plurality of fluid-passage tubes (12, 112) having a same orientation and conjoined in a direction perpendicular to this orientation, so as to cover the first bundle (8), in that the said circulation means (11, 111, 8, 31, 32, 131, 132, 2a, 2b) comprise, furthermore, means (31, 32, 131, 132) for causing the refrigerated fluid to flow through the tubes (12, 112) of the second bundle (11, 111), of which there is at least one, in parallel in a same direction, and in that the bundles (11, 111, 8) of the said group pass through the container (5, 105), at the same time delimiting therein, by means of at least one wall (19, 23) of the second flat tube bundle (11, 111), of which there is at least one, at least one space (27) for the production and storage of the ice, with which this wall (19, 23) is in contact.

6. Production container according to Claim 5, characterized in that the said group (17, 22, 117, 122) comprises two flat tube bundles (8, 11, 111), namely a single second flat tube bundle (11, 111) for the refrigerated fluid, interposed between the first flat tube bundle (8) for the fluid to be refrigerated and the space (27) for the production and storage of ice and comprising the said wall (19, 23) contiguous to and delimiting this space (27).

7. Production container according to Claim 5, characterized in that the said group (22, 122) comprises three flat tube bundles (8, 11, 111), namely the first flat tube bundle (8) for the fluid to be refrigerated, interposed between two second flat tube bundles (11, 111) for the refrigerated fluid, comprising the said respective wall (19, 23) contiguous to and delimiting a respective space (27) for the production and storage of ice.

8. Production container according to any one of Claims 5 to 7, characterized in that it comprises a plurality of the said groups (17, 22, 117, 122) arranged parallel to one another in such a way that the second bundles (11, 111) for the refrigerated fluid have the same orientation and that the first bundles (8) for the fluid to be refrigerated have the same orientation, and in that the second bundles (11, 111) for the refrigerated fluid are connected to one another by collector means (31, 32, 131, 132) for refrigerated fluid and the first bundles (8) for the fluid to be refrigerated are connected to one another by collector means (2a, 2b) for fluid to be refrigerated.

9. Production container according to Claim 8, characterized in that it comprises at least one flat side wall (6) and along the latter, between the latter and such a space (27) for the production and storage of ice, a group (17) of two flat tube bundles (8, 11, 111) at a rate of a single second flat tube bundle (11, 111) for the refrigerated fluid, comprising the said wall (19) contiguous to and delimiting the said space (27) for the production and storage of ice, and of one first flat tube bundle (8) for the fluid to be refrigerated, contiguous to the said side wall (10).

10. Production container according to either one of Claims 8 and 9, characterized in that it comprises at least two flat side walls (6) parallel to one another and, between these, at least one group (22) of three flat tube bundles (8, 11, 111) parallel to the said side walls (6) and defining respectively towards one or the other of the latter such a space (27) for the production and storage of ice, and in that the said group (22) comprises a first flat tube bundle (8) for the fluid to be refrigerated, interposed between two second flat tube bundles (11, 111) for the refrigerated fluid, each of which comprises the said respective wall (23) contiguous to and delimiting a respective space (27) for the production and storage of ice.

11. Production container according to either one of Claims 6 and 9, characterized in that the said group (17, 22, 117, 122) of two flat tube bundles (8, 11, 111) is defined by three flat walls (6, 18, 19) parallel to one another and connected to one another by means of partitions (20, 21) parallel to one another and defining the tubes of the bundles (8, 11, 111) between the walls (6, 18, 19), one of the said walls forming the said wall (19) contiguous to and delimiting the said space (27) for the production and storage of the ice.

12. Production container according to either one of Claims 7 and 10, characterized in that the said group (22) of three flat tube bundles (8, 11, 111) is defined by four flat walls (23, 24) parallel to one another and connected to one another by means of partitions (25, 125, 26) parallel to one another and defining the tubes of the bundles (8, 11, 111) between the walls (23, 24), two of the said walls forming the said walls (23) contiguous to and delimiting the said spaces (27) for the production and storage of ice.

13. Production container according to any one of Claims 5 to 12, characterized in that the first and the second bundles (11, 8) respectively for the fluid to be refrigerated and for the refrigerated fluid cross one another.

14. Production container according to any one of Claims 5 to 12, characterized in that the first and the second bundles (111, 8) respectively for the fluid to be refrigerated and for the refrigerated fluid have the same orientation, and in that the said circulation means (131, 132) comprise means (2a, 2b, 131, 132) for causing the fluid to be refrigerated and the refrigerated fluid to flow respectively through the first and the second bundles (111, 8) in directions (129, 3) opposite one another.

15. Production container according to any one of Claims 5 to 14, characterized in that it comprises means (46) for discharging condensates from the first bundle (8) or the first bundles (8) for the fluid to be refrigerated.
